# EUROPEAN PATENT APPLICATION

(11) **EP 4 811 138 A1**
(43) Date of publication of application: **23.09.2026**
(21) Application number: 25819093.3
(22) Date of filing: 05.06.2025
(51) Int. Cl.: G06F 11/34, G06F 11/30

(54) **MEMORY ACCESS INFORMATION RECORDING METHOD, MEMORY DATA ANALYSIS METHOD, AND RELATED DEVICE**

(30) Priority: 07.06.2024 CN 202410740814
(71) Applicant: HYGON INFORMATION TECHNOLOGY CO., LTD., Binhai New Area, Tianjin 300392 (CN)
(72) Inventor: ZENG, Feng, Tianjin 300392 (CN); LU, Kaifang, Tianjin 300392 (CN); JIA, Qixiang, Tianjin 300392 (CN); SHANG, Zheng, Tianjin 300392 (CN)
(74) Representative: Metroconsult Srl
(86) International application number: PCT/CN2025/099231
(87) International publication number: WO 2025/252141

(57) **Abstract**

Embodiments of the present disclosure provide a method for recording memory access information, a method for analyzing memory data and relevant devices, wherein the method for recording memory access information includes: obtaining an access request, the access request at least comprising access address information and access data source information, the access data source information at least comprising identification information of a device that issues the access request; generating to-be-recorded data and a write command corresponding to the to-be-recorded data according to the access request, the to-be-recorded data comprising the access address information and the access data source information of the access request; and writing the to-be-recorded data into a preset address range of a memory based on the write command corresponding to the to-be-recorded data; the preset address range being a preset region for storing the to-be-recorded data, and the preset address is set with access permissions. In the embodiments of the present disclosure, recording of sources of memory data is achieved by writing the to-be-recorded data into the preset address range of the memory.

## Description

### RELATED APPLICATION

This disclosure claims the priority of the Chinese invention patent submitted on June 7, 2024, with the application number 202410740814.2 and the patent title "METHOD FOR RECORDING MEMORY ACCESS INFORMATION, METHOD FOR ANALYZING MEMORY DATA AND RELEVANT DEVICES", all the contents of which are incorporated herein.

### TECHNICAL FIELD

Embodiments of the present disclosure relate to the technical field of computers, specifically relate to a method for recording memory access information, a method for analyzing memory data and relevant devices.

### BACKGROUND

In current highly complex processor systems, interaction between upstream devices such as a processor core and a memory has become increasingly frequent and dense. With continuous improvement of computer system performance, memory capacities are constantly increasing, transmission speeds of commands and data are also continuously rising, and there is also an explosive growth trend in data throughputs of memories.

To enhance system performance, it is necessary to analyze memory data to reflect features of the memory data, and analyzing the memory data from the perspective of data sources can visually reflect data features of each device interacting with a memory.

However, how to obtain data sources of the memory data is an urgent technical problem to be solved by those skilled in the art.

### SUMMARY OF INVENTION

In view of this, the embodiments of the present disclosure provide a method for recording memory access information, a method for analyzing memory data and relevant devices, which achieve recording of sources of memory data.

To achieve the above purpose, the embodiments of the present disclosure provide the following technical solutions.

In a first aspect, the embodiments of the present disclosure provide a method for recording memory access information, including:
obtaining an access request, the access request at least comprising access address information and access data source information, the access data source information at least comprising identification information of a device that issues the access request;
generating to-be-recorded data and a write command corresponding to the to-be-recorded data according to the access request, the to-be-recorded data comprising the access address information and the access data source information of the access request; and
writing the to-be-recorded data into a preset address range of a memory based on the write command corresponding to the to-be-recorded data; the preset address range being a preset region for storing the to-be-recorded data, and the preset address is set with access permissions.

Optionally, before the step of generating to-be-recorded data and a write command corresponding to the to-be-recorded data according to the access request, the method further includes:
obtaining a to-be-recorded data trigger command, the to-be-recorded data trigger command being used to trigger execution of the step of generating to-be-recorded data and a write command corresponding to the to-be-recorded data according to the access request;
   or,
obtaining a to-be-recorded data prohibition command, the to-be-recorded data prohibition command being used to prohibit execution of the step of generating to-be-recorded data and a write command corresponding to the to-be-recorded data according to the access request.

Optionally, writing the to-be-recorded data into a preset address range of a memory based on the write command corresponding to the to-be-recorded data includes:
transmitting the write command to a command queue to wait for arbitration, and if the write command is selected, writing the to-be-recorded data into the preset address range, so that the to-be-recorded data is recorded within the preset address range.

Optionally, generating to-be-recorded data and a write command corresponding to the to-be-recorded data according to the access request specifically is:
decoding the access address information of the access request;
generating the to-be-recorded data based on decoded access address information and the access data source information of the access request; and
generating a write command corresponding to the to-be-recorded data.

Optionally, in the step of generating to-be-recorded data and a write command corresponding to the to-be-recorded data according to the access request, an access address of the write command increments by a preset value within the preset address range.

Optionally, the step of generating to-be-recorded data and a write command corresponding to the to-be-recorded data according to the access request, the method further includes:
if the access address of the write command reaches an upper limit of the preset address range, stopping generating the write command.

Optionally, after the step of stopping generating the write command, the method further includes:
stopping generating the to-be-recorded data.

Optionally, in the step of writing the to-be-recorded data into a preset address range of a memory based on the write command corresponding to the to-be-recorded data, a data volume of the to-be-recorded data is less than or equal to the preset value.

Optionally, when the data volume of the to-be-recorded data is less than the preset value, a zero-padding mode is adopted so that the data volume of the to-be-recorded data is equal to the preset value.

Optionally, after the step of generating to-be-recorded data and a write command corresponding to the to-be-recorded data according to the access request, and before the step of writing the to-be-recorded data into a preset address range of a memory based on the write command corresponding to the to-be-recorded data, the method further includes:
caching the to-be-recorded data into a write data cache.

Optionally, the identification information at least comprises: a processor core identity number, or input/output device identity number; wherein when the processor core identity number exists, the identification information further comprises a thread identity number inside the processor core.

Optionally, the access data source information further comprises a priority of the access request and a type of the access request.

In a second aspect, the embodiments of the present disclosure provide a method for analyzing memory data, including:
performing data analysis on memory data based on to-be-recorded data, wherein the to-be-recorded data is written into a preset address range of a memory based on the method for recording memory access information described in the first aspect.

In a third aspect, the embodiments of the present disclosure provide an apparatus for recording memory access information, comprising:
an obtaining module for obtaining an access request, the access request at least comprising access address information and access data source information, the access data source information at least comprising identification information of a device that issues the access request;
a generating module for generating to-be-recorded data and a write command corresponding to the to-be-recorded data according to the access request, the to-be-recorded data comprising the access address information and the access data source information of the access request; and
a writing module for writing the to-be-recorded data into a preset address range of a memory based on the write command corresponding to the to-be-recorded data; the preset address range being a preset region for storing the to-be-recorded data, and the preset address is set with access permissions.

In a fourth aspect, the embodiments of the present disclosure provide a memory controller, comprising the apparatus for recording memory access information described in the third aspect.

Optionally, it further comprises:
a command queue for storing access requests transmitted by an upstream device of the memory controller and write commands generated by the apparatus for recording memory access information described in the third aspect;
a write data cache module for caching memory access write data corresponding to the access request, and the to-be-recorded data generated by the apparatus for recording memory access information described in the third aspect;
an arbitrator for selecting an access request or a write command from the command queue as a target task; wherein if the obtained target task is a write command, the to-be-recorded data corresponding to the write command is written into a preset address range, so that the to-be-recorded data is recorded within the preset address range.

Optionally, selecting an access request or a write command from the command queue as a target task specifically is:
selecting an access request or a write command from to-be-executed access requests or write commands stored in the command queue as a target task, according to access priorities and/or address access efficiency of the to-be-executed access requests or write commands.

In a fifth aspect, the embodiments of the present disclosure provide an electronic device, comprising the memory controller described in the fourth aspect.

In a sixth aspect, the embodiments of the present disclosure provide a storage medium, the storage medium stores one or more computer-executable instructions, and when the one or more computer-executable instructions are executed, the method for recording memory access information described in the first aspect is implemented, or the method for analyzing memory data described in the second aspect is implemented.

In a seventh aspect, the embodiments of the present disclosure provide a computer program product, comprising one or more computer-executable instructions, and when the one or more computer-executable instructions are executed, the method for recording memory access information described in the first aspect is implemented, or the method for analyzing memory data described in the second aspect is implemented.

Embodiments of the present disclosure provide a method for recording memory access information, a method for analyzing memory data and relevant devices, wherein the method for recording memory access information includes: obtaining an access request, the access request at least comprising access address information and access data source information, the access data source information at least comprising identification information of a device that issues the access request; generating to-be-recorded data and a write command corresponding to the to-be-recorded data according to the access request, the to-be-recorded data comprising the access address information and the access data source information of the access request; and writing the to-be-recorded data into a preset address range of a memory based on the write command corresponding to the to-be-recorded data; the preset address range being a preset region for storing the to-be-recorded data, and the preset address being set with access permissions.

It may be seen that in the method for recording memory access information provided by the embodiments of the present disclosure, recording of sources of memory data is achieved by generating to-be-recorded data comprising access address information and access data source information of the access request, and a write command corresponding to the to-be-recorded data, and by writing the to-be-recorded data into a preset address range of a memory.

### BRIEF DESCRIPTION OF THE DRAWINGS

In order to describe a technical solution in the embodiments of the present disclosure or in a prior art more clearly, the drawings required for use in the embodiments or the prior art are briefly introduced below. Obviously, the drawings in the following description are only the embodiments of the present disclosure. Those skilled in the art may further obtain other drawings according to the provided drawings under the premise that they do not pay inventive labor.
FIG. 1 is an optional block diagram of a processor system;
FIG. 2 is an optional structural schematic diagram of data interaction between a memory controller and a memory;
FIG. 3 is an optional process schematic diagram of a method for recording memory access information provided by the embodiments of the present disclosure;
FIG. 4 is another optional process schematic diagram of a method for recording memory access information provided by the embodiments of the present disclosure;
FIG. 5 is an optional flow diagram of generating to-be-recorded data and a write command corresponding to the to-be-recorded data in the embodiments of the present disclosure;
FIG. 6 is a first schematic diagram of to-be-recorded data provided by the embodiments of the present disclosure;
FIG. 7 is a second schematic diagram of to-be-recorded data provided by the embodiments of the present disclosure;
FIG. 8 is an optional structural schematic diagram of an apparatus for recording memory access information provided by the embodiments of the present disclosure;
FIG. 9 is an optional structural schematic diagram of a generating module in an apparatus for recording memory access information provided by the embodiments of the present disclosure;
FIG. 10 is an optional structural schematic diagram of a memory controller provided by the embodiments of the present disclosure.

### DETAILED DESCRIPTION

Technical solutions in the embodiments of the present disclosure will be clearly and completely described below with reference to the drawings in the embodiments of the present disclosure, obviously the described embodiments are only some embodiments of the present disclosure, not all embodiments. Based on the embodiments in the present disclosure, all other embodiments obtained by those skilled in the art without paying inventive labor fall into the scope protected by the present disclosure.

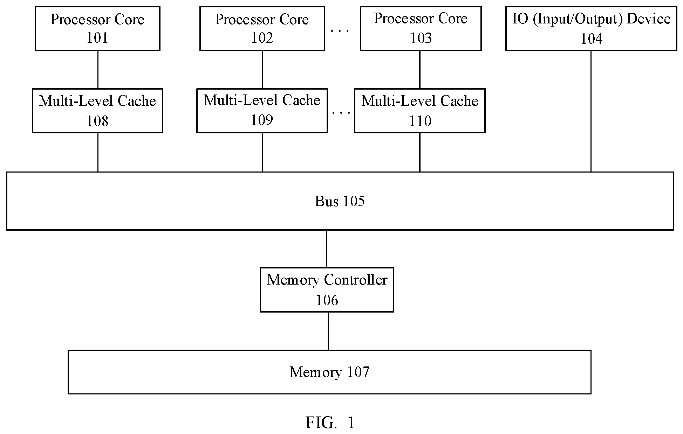

To facilitate understanding of a processor system, FIG. 1 exemplarily shows an optional block diagram of a processor system. As shown in FIG. 1, a processor system may comprise a plurality of processor cores such as a processor core 101, a processor core 102, and a processor core 103; multi-level caches provided outside the plurality of processor cores, such as a multi-level cache 108 connected with the processor core 101, a multi-level cache 109 connected with the processor core 102, and a multi-level cache 110 connected with the processor core 103; a bus 105; a memory controller 106 and a memory 107; wherein the multi-level caches perform data interaction with the memory 107 via the memory controller 106. In an optional implementation, the bus 105 may further connect an IO (input/output) device104 such as a PCIe device, to perform data interaction.

The processor core is a computing and control core of the processor system. The processor core e.g. may be a CPU (Central Processing Unit) core, a GPU (Graphics Processing Unit) core, an NPU (Neural-network Processing Unit) core, an embedded neural network processor core, a TPU (Tensor Processing Unit) core, or an AI (Artificial Intelligence) core, etc.

Cache is a storage with an extremely fast access speed between the processor core and the memory, and is used to map a relatively large number of storage units in the memory via a relatively small number of storage units. Cache generally has a multi-level structure, wherein a relatively small number of storage units in an upper-level cache may map a relatively large number of storage units in a lower-level cache, and a relatively small number of storage units in a last-level cache may map a relatively large number of storage units in a memory; and the upper-level cache has a faster data access speed than the lower-level cache, but a capacity of the upper-level cache is smaller than that of the lower-level cache. On this basis, the processor core may start from the highest-level cache with the fastest data access speed but the smallest capacity, and achieve data processing by processing multi-level caches and a memory level by level. It should be noted that the upper-level cache is closer to the processor core than the lower-level cache.

In current highly complex processor systems, interaction between upstream devices such as a processor core and a memory has become increasingly frequent and dense. The memory controller as a key bridge connecting the two undertakes important tasks of processing a large number of command operations and data access. However, with continuous advancement of technologies, performance requirements for processor systems are also constantly increasing, transmission speeds of commands and data are continuously rising, and data throughputs are also showing an explosive growth trend.

Understandably, to enhance system performance, it is necessary to analyze memory data to reflect features of the memory data, and analyzing the memory data from the perspective of data sources can visually reflect data features of each device interacting with a memory.

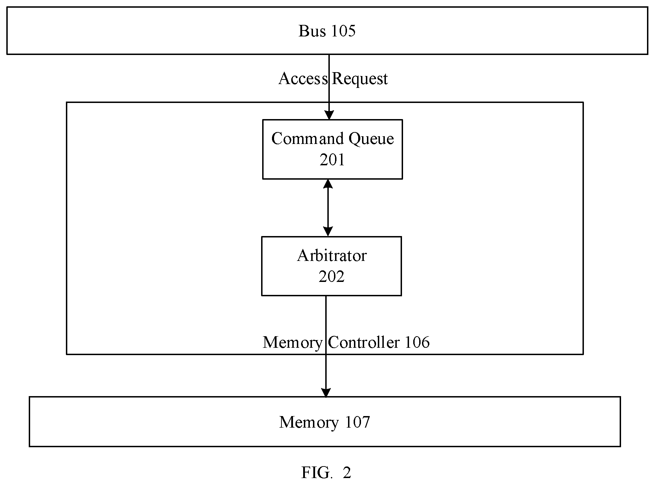

Further, referring to FIG. 2, FIG. 2 is an optional structural schematic diagram of data interaction between a memory controller and a memory. As shown in FIG. 2, after receiving an access request transmitted from the upstream, the memory controller 106 parses access address information of the access request and saves it together with information such as an access priority of the access request into the command queue 201. The arbitrator 202 selects a target access request from the command queue 201 according to the access priority and/or address access efficiency of the access request, and transmits the request to the memory to perform corresponding operations (such as read or write operation of data).

Obviously, this kind of memory access method cannot record a data source of memory data.

In view of this, the embodiments of the present disclosure provide a method for recording memory access information, a method for analyzing memory data and relevant devices, wherein the method for recording memory access information includes: obtaining an access request, the access request at least comprising access address information and access data source information, the access data source information at least comprising identification information of a device that issues the access request; generating to-be-recorded data and a write command corresponding to the to-be-recorded data according to the access request, the to-be-recorded data comprising the access address information and the access data source information of the access request; and writing the to-be-recorded data into a preset address range of a memory based on the write command corresponding to the to-be-recorded data; the preset address range being a preset region for storing the to-be-recorded data, and the preset address being set with access permissions.

It may be seen that in the method for recording memory access information provided by the embodiments of the present disclosure, recording of sources of memory data is achieved by generating to-be-recorded data comprising access address information and access data source information of the access request, and a write command corresponding to the to-be-recorded data, and by writing the to-be-recorded data into a preset address range of a memory.

Correspondingly, in memory data analysis, based on the memory data source provided by the above scheme as a data basis, data features of each device interacting with memory may be reflected visually, thereby being more conducive to proposing feasible software and hardware optimization schemes based on corresponding data analysis.

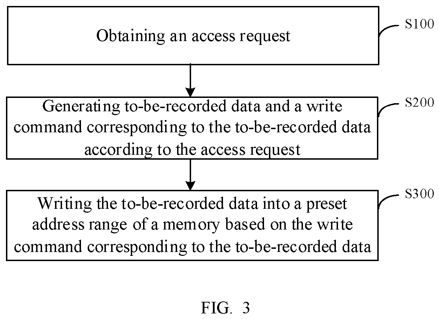

Based on the above idea, FIG. 3 exemplarily shows an optional process schematic diagram of a method for recording memory access information provided by the embodiments of the present disclosure, the method for recording memory access information may be executed and implemented by a memory controller. As shown in FIG. 3, the process of this method may include the following steps.

Step S100: obtaining an access request.

The access request refers to a request transmitted by an upstream device (such as a processor core, an IO (input/output) device, etc.) to a memory controller. The memory controller may perform data read or write operation on a memory area requested for access, according to the access request.

In an optional implementation, the access request may comprise access address information and access data source information, the access address information refers to a memory address specified by an upstream device when transmitting an access request and needing to be accessed, so that a memory controller accesses data of a memory area requested for access based on the access address information; the access data source information at least comprises identification information of a device that issues the access request. In an optional implementation, the access data source information may further comprise a priority of the access request and a type of the access request, etc.

In an optional implementation, the identification information may comprise: a processor core identity number, or input/output device identity number; wherein when the processor core identity number exists, the identification information may further comprise a thread identity number inside the processor core.

Step S200: generating to-be-recorded data and a write command corresponding to the to-be-recorded data according to the access request.

The to-be-recorded data may comprise the access address information and the access data source information of the access request. The access address information refers to a memory address specified by the upstream device when transmitting the access request and needing to be accessed, and is used to indicate to the memory controller to perform data read or write operation at a specified memory position. In the memory, each memory position has a unique address identifier, thereby the upstream device may access data in the memory by transmitting an access request containing specific address information.

The access data source information at least comprises identification information of a device that issues the access request. In an optional implementation, the access data source information may further comprise a priority of the access request and a type of the access request, etc. The identification information of the device that issues the access request may clearly indicate which specific device transmits the access request. In an optional implementation, the identification information may comprise: a processor core identity number, or input/output device identity number; wherein when the processor core identity number exists, the identification information may further comprise a thread identity number inside the processor core.

The priority of the access request may indicate importance or emergency degree of the access request, a request with a high priority will be given priority for processing, while a request with a low priority needs to be queued for processing. For example, when multiple programs or processes simultaneously issue an access request, the memory controller will decide which request to be processed first according to priorities of these requests.

The type of the access request refers to an operation type performed by the access request, for example, it may be a read access or write access.

The to-be-recorded data is generated according to the access request and contains data information corresponding to the access request, so as to be used for subsequent recording, tracking or analysis. It is understandable that the to-be-recorded data contains specific information about which device accesses which memory address.

In an optional implementation, to reduce occupation of a memory access bandwidth, the write command may be a new request generated by multiple original access requests. An aggregated write command may make more efficient use of a memory bandwidth because it reduces the number of new requests and avoids frequent execution of small, scattered write operations.

Step S300: writing the to-be-recorded data into a preset address range of a memory based on the write command corresponding to the to-be-recorded data.

The preset address range is a preset region for storing the to-be-recorded data, and the preset address is set with access permissions to ensure that only authorized systems or processes can access it, thereby ensuring security and integrity of data.

It may be seen that in the method for recording memory access information provided by the embodiments of the present disclosure, recording of sources of memory data is achieved by generating to-be-recorded data comprising access address information and access data source information of the access request, and a write command corresponding to the to-be-recorded data, and by writing the to-be-recorded data into a preset address range of a memory.

Correspondingly, in memory data analysis, based on the memory data source provided by the above scheme as a data basis, data features of each device interacting with memory may be reflected visually, thereby being more conducive to proposing feasible software and hardware optimization schemes based on corresponding data analysis.

For example, in the context of performing memory controller optimization design, the processing flow of the access requests is generally executed tens of thousands or even hundreds of millions of times in a preset period, and processing information generated during the processing is extracted as basic data so as to analyze defects and problems of the memory controller. The memory data sources recorded in the above scheme can achieve detailed analysis of memory data, and provide a basis for optimizing memory controller designs.

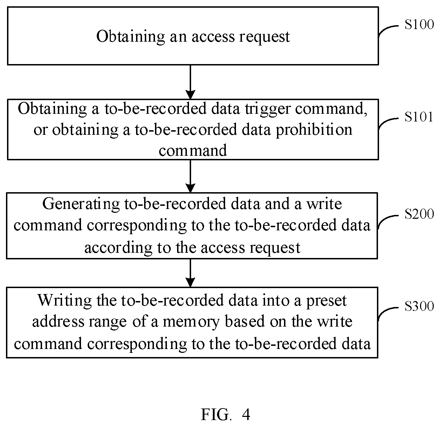

In an optional example, referring to FIG. 4, FIG. 4 shows another optional process schematic diagram of a method for recording memory access information provided by the embodiments of the present disclosure. As shown in FIG. 4, before the step of generating to-be-recorded data and a write command corresponding to the to-be-recorded data according to the access request, the method may further include:

Step S101: obtaining a to-be-recorded data trigger command, or obtaining a to-be-recorded data prohibition command.

The to-be-recorded data trigger command is used to trigger execution of the step of generating to-be-recorded data and a write command corresponding to the to-be-recorded data according to the access request; and the to-be-recorded data prohibition command is used to prohibit execution of the step of generating to-be-recorded data and a write command corresponding to the to-be-recorded data according to the access request.

According to the to-be-recorded data trigger command or the to-be-recorded data prohibition command, a write process of the to-be-recorded data may be opened or closed based on a demand, thereby it is opened when there is a design demand, and is closed when there is no demand.

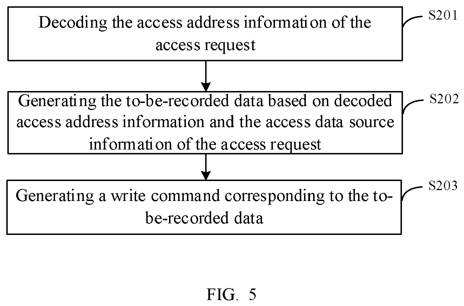

In an optional example, referring to an optional flow diagram of generating to-be-recorded data and a write command corresponding to the to-be-recorded data in the embodiments of the present disclosure as shown in FIG. 5, it may include the following steps:
Step S201: decoding the access address information of the access request.

When access address information provided by the upstream device is a logical address, it needs to be converted to a physical address before memory access can be carried out (that is, the access address information is decoded), a process of address conversion ensures that the upstream device can access a memory via the logical address. The logical address refers to a relative address generated by a program during compilation or assembly, and the physical address refers to an actual address of each storage unit in a memory, and is used to uniquely identify a specific position in the memory.

In an optional implementation, the address conversion may be completed by one or more address decoders. The address decoder may parse a logical address into constituent parts of a physical address, such as a chip select address, a bank address, a row address, and a column address, etc. These constituent parts correspond to a physical organization mode of a memory, thereby may ensure that the memory controller can accurately locate a specific position in the memory.

The chip select address is used to select a specific chip or module in a memory. The bank address is used to select a specific bank in a memory having multiple banks. The row address and the column address are used to locate specific storage units within a selected chip or bank.

It should be noted that a specific address conversion mode and a memory organization mode may vary due to different memory architectures and standards. Therefore, in practical applications, the access address information may be decoded accordingly according to an actual situation, the embodiments of the present disclosure do not impose limitations thereto.

Step S202: generating the to-be-recorded data based on decoded access address information and the access data source information of the access request.

In an optional implementation, the decoded access address information e.g. may be a chip select address, a bank address, a row address and a column address, etc.

The access data source information at least comprises identification information of a device that issues the access request. In an optional implementation, the access data source information may further comprise a priority of the access request and a type of the access request, etc. The identification information of the device that issues the access request may clearly indicate which specific device transmits the access request. In an optional implementation, the identification information may comprise: a processor core identity number, or input/output device identity number; wherein when the processor core identity number exists, the identification information may further comprise a thread identity number inside the processor core.

The priority of the access request may indicate importance or emergency degree of the access request, a request with a high priority will be given priority for processing, while a request with a low priority needs to be queued for processing. For example, when multiple programs or processes simultaneously issue an access request, the memory controller will decide which request to be processed first according to priorities of these requests.

The type of the access request refers to an operation type performed by the access request, for example, it may be a read access or write access.

The to-be-recorded data is generated according to the access request and contains data information corresponding to the access request, so as to be used for subsequent recording, tracking or analysis. The to-be-recorded data may be customized and combined according to a software configuration. Software administrators or developers may pre-set or configure a content and a format of each piece of data according to a need, so as to generate to-be-recorded data that meets specific requirements.

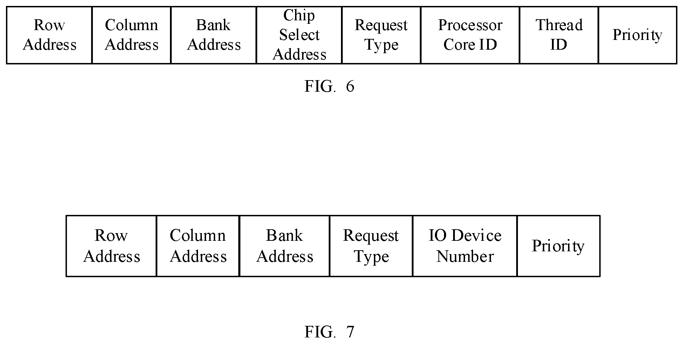

In an optional example, referring to FIG. 6, FIG. 6 shows a first schematic diagram of to-be-recorded data provided by the embodiments of the present disclosure. As shown in FIG. 6, the to-be-recorded data may comprise a row address, a column address, a bank address, a chip select address, a request type, a processor core identity number (i.e., the processor core ID in the drawing), a thread identity number inside the processor core (i.e., the thread ID in the drawing), and a priority.

In another optional example, referring to FIG. 7, FIG. 7 shows a second schematic diagram of to-be-recorded data provided by the embodiments of the present disclosure. As shown in FIG. 7, the to-be-recorded data may comprise a row address, a column address, a bank address, a request type, an input/output device identity number (i.e., the IO device number in the figure), and a priority.

In an optional implementation, after the step of generating to-be-recorded data and a write command corresponding to the to-be-recorded data according to the access request, and before the step of writing the to-be-recorded data into a preset address range of a memory based on the write command corresponding to the to-be-recorded data, the method may further include: caching the to-be-recorded data into a write data cache.

Since there is often latency in network transmission or internal data transmission, especially when dealing with large amounts of data or high-concurrency requests, generated to-be-recorded data is cached in the write data cache. Via a cache mechanism, the to-be-recorded data may be temporarily stored in the write data cache and transmitted by waiting for an appropriate time, thereby reducing latency caused by waiting for transmission.

By continuing to refer to FIG. 5, step S203 is performed: generating a write command corresponding to the to-be-recorded data.

In an optional implementation, an access address of the write command may point to a preset address range, the preset address range is a preset region for storing the to-be-recorded data, and the preset address is set with access permissions to ensure that only authorized systems or processes can access it, thereby ensuring security and integrity of data.

In specific examples, the preset address range may be configured by a software, for example it may be {BasePhysical Addr, LimitPhysical Addr}. And the preset address is set with access permissions, for example the preset address may not be open to unauthorized operating systems or application softwares, to ensure that only authorized systems or processes can access it, thereby ensuring the security and integrity of data.

BasePhysical Addr and LimitPhysical Addr are two parameters for defining the preset address range. These parameters allow software administrators or developers to flexibly configure and specify a specific physical memory region for storing the to-be-recorded data. Specifically, BasePhysical Addr is a start address of the preset address range, and is used to specify a start position of a memory region where the to-be-recorded data is stored. LimitPhysical Addr is an end address of the preset address range, and is used to specify an end position of the memory region where the to-be-recorded data is stored.

In an optional implementation, to ensure that access addresses of all write commands point to the preset address range and that the access addresses of each write command do not conflict with each other, an access address of a write command may be set to increment by a preset value within the preset address range, for example, the access address of the write command increments by 64 bytes each time. The access address of the write command is updated by incrementing by 64 bytes each time, which may ensure that a write operation is performed each time within a fixed and predefined block size.

At the same time, a data volume of the to-be-recorded data may be controlled to be less than or equal to the preset value, such as 64 bytes, to ensure that the to-be-recorded data does not span multiple blocks, thereby avoiding risks of address conflicts and data confusion. In an optional implementation, if the data volume of the to-be-recorded data is less than the preset value such as 64 bytes, a zero-padding mode may be adopted so that the data volume of the to-be-recorded data is equal to the preset value, so as to ensure that a complete block is used for the write operation each time.

When the access address of the write command reaches an upper limit of the preset address range, such as LimitPhysical Addr, it means that a preset region for storing the to-be-recorded data has been filled. At this point, generation of the write command should be stopped to ensure that the access address of the write command does not exceed the preset address range. In an optional implementation, after the step of stopping generating the write command, the method may further include: stopping generating the to-be-recorded data to avoid data conflicts or loss.

It should be noted that 64 bytes is only an example of a preset value, the preset value may further be adjusted according to specific application scenarios and memory characteristics, the embodiments of the present disclosure do not impose limitations thereto.

In an optional implementation, the step of writing the to-be-recorded data into a preset address range of a memory based on the write command corresponding to the to-be-recorded data may include: transmitting the write command to a command queue to wait for arbitration, and if the write command is selected, writing the to-be-recorded data into the preset address range, so that the to-be-recorded data is recorded within the preset address range.

The command queue is used to cache a write command, temporarily store the write command, and wait for arbitration. Arbitration may be implemented by an arbitrator, the arbitrator will select a target command from the command queue according to a priority of the write command and/or address access efficiency, and transmit the command to the memory to perform corresponding operations.

It is understandable that when the write command is selected by the arbitrator, it is the time to write to-be-recorded data corresponding to the selected write command. The to-be-recorded data corresponding to the write command is written into the preset address range, so that the to-be-recorded data is recorded within the preset address range.

In further examples, the embodiments of the present disclosure further provide a method for analyzing memory data in which data analysis on memory data is performed based on to-be-recorded data, wherein the to-be-recorded data is written into a preset address range of a memory based on the method for recording memory access information described in the above solutions. In memory data analysis, based on the memory data source provided by the above scheme as a data basis, data features of each device interacting with a memory may be reflected visually, thereby being more conducive to proposing feasible software and hardware optimization schemes based on corresponding data analysis.

The following is an introduction to an apparatus for recording memory access information provided by the embodiments of the present disclosure, the apparatus for recording memory access information described below may be regarded as a software functional module or hardware functional module that requires to be set to implement the method for recording memory access information provided by the embodiments of the present disclosure. Contents of the apparatus for recording memory access information described below may be referred to and corresponded to the contents of the method described above.

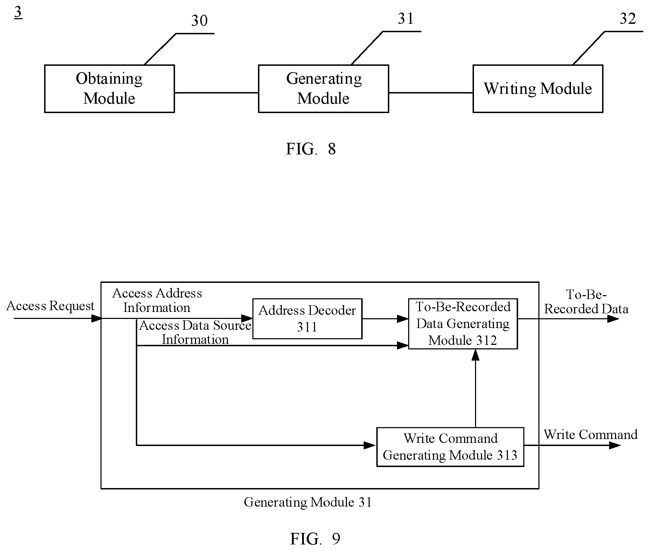

In an optional implementation, FIG. 8 exemplarily shows an optional structural schematic diagram of an apparatus for recording memory access information provided by the embodiments of the present disclosure, the apparatus for recording memory access information is used to implement the method for recording memory access information provided by the embodiments of the present disclosure, and as shown in FIG. 8, the apparatus 3 for recording memory access information may comprise:
an obtaining module 30 for obtaining an access request, the access request at least comprising access address information and access data source information, the access data source information at least comprising identification information of a device that issues the access request;
a generating module 31 for generating to-be-recorded data and a write command corresponding to the to-be-recorded data according to the access request, the to-be-recorded data comprising the access address information and the access data source information of the access request; and
a writing module 32 for writing the to-be-recorded data into a preset address range of a memory based on the write command corresponding to the to-be-recorded data; the preset address range being a preset region for storing the to-be-recorded data, and the preset address is set with access permissions.

Optionally, before the generating module 31 is used to generate to-be-recorded data and a write command corresponding to the to-be-recorded data according to the access request, it may further comprise:
obtaining a to-be-recorded data trigger command, the to-be-recorded data trigger command being used to trigger execution of the step of generating to-be-recorded data and a write command corresponding to the to-be-recorded data according to the access request;
   or,
obtaining a to-be-recorded data prohibition command, the to-be-recorded data prohibition command being used to prohibit execution of the step of generating to-be-recorded data and a write command corresponding to the to-be-recorded data according to the access request.

Optionally, that the writing module 32 is used to write the to-be-recorded data into a preset address range of a memory based on the write command corresponding to the to-be-recorded data may include:
transmitting the write command to a command queue to wait for arbitration, and if the write command is selected, writing the to-be-recorded data into the preset address range, so that the to-be-recorded data is recorded within the preset address range.

Optionally, the generating module 31 is used to generate to-be-recorded data and a write command corresponding to the to-be-recorded data according to the access request, which specifically is:
decoding the access address information of the access request;
generating the to-be-recorded data based on decoded access address information and the access data source information of the access request; and
generating a write command corresponding to the to-be-recorded data.

In an optional implementation, referring to FIG. 9, FIG. 9 shows an optional structural schematic diagram of a generating module in an apparatus for recording memory access information provided by the embodiments of the present disclosure. As shown in FIG. 9, in the embodiments of the present disclosure, the access address information may be decoded by the address decoder 311 in FIG. 9, thereby the to-be-recorded data generating module 312 may generate to-be-recorded data based on decoded access address information and the access data source information of the access request. The write command generating module 313 in FIG. 9 may generate a write command corresponding to the to-be-recorded data, thereby the to-be-recorded data may be written into a preset address range of a memory based on the write command corresponding to the to-be-recorded data.

The address decoder 311 may parse a logical address into constituent parts of a physical address, such as a chip select address, a bank address, a row address, and a column address, etc. These constituent parts correspond to a physical organization mode of a memory, thereby may ensure that the memory controller can accurately locate a specific position in the memory.

The chip select address is used to select a specific chip or module in a memory. The bank address is used to select a specific bank in a memory having multiple banks. The row address and the column address are used to locate specific storage units within a selected chip or bank.

It should be noted that a specific address conversion mode and a memory organization mode may vary due to different memory architectures and standards. Therefore, in practical applications, the access address information may be decoded accordingly according to an actual situation, the embodiments of the present disclosure do not impose limitations thereto.

Optionally, an access address of the write command increments by a preset value within the preset address range.

Optionally, if the access address of the write command reaches an upper limit of the preset address range, generating the write command is stopped.

Optionally, after stopping generating the write command, it may further include: stopping generating the to-be-recorded data.

In the optional implementation, when the access address of the write command reaches the upper limit of the preset address range, the write command generating module 313 stops generating the write command and transmits a signal to the to-be-recorded data generating module 312, notifying the to-be-recorded data generating module 312 to stop generating the to-be-recorded data based on the access request, so as to avoid data conflicts or loss.

Optionally, the data volume of the to-be-recorded data is less than or equal to the preset value.

Optionally, when the data volume of the to-be-recorded data is less than the preset value, a zero-padding mode is adopted so that the data volume of the to-be-recorded data is equal to the preset value.

Optionally, after generating to-be-recorded data and a write command corresponding to the to-be-recorded data according to the access request, and before writing the to-be-recorded data into a preset address range of a memory based on the write command corresponding to the to-be-recorded data, it may further include: caching the to-be-recorded data into a write data cache.

Optionally, the identification information at least comprises: a processor core identity number, or input/output device identity number; wherein when the processor core identity number exists, the identification information may further comprise a thread identity number inside the processor core.

Optionally, the access data source information may further comprise a priority of the access request and a type of the access request.

In an optional implementation, the apparatus for recording memory access information provided by the embodiments of the present disclosure may be placed at different positions of a processor system to record to-be-recorded data containing data information corresponding to the access request. For example, it may be placed upstream of a multi-level cache or at different observation points such as a bus to record the to-be-recorded data.

The following takes the apparatus for recording memory access information being placed inside the memory controller as an example for introduction, it is understandable that in practical applications, the apparatus for recording memory access information may further be placed outside the memory controller to record the to-be-recorded data containing data information corresponding to the access request. Embodiments of the present disclosure do not impose limitations on a position of the apparatus for recording memory access information.

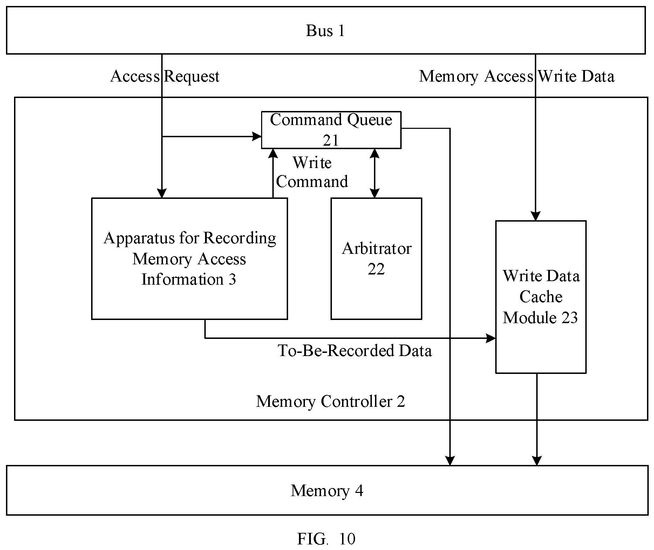

In an optional implementation, FIG. 10 exemplarily shows an optional structural schematic diagram of a memory controller provided by the embodiments of the present disclosure, the memory controller is provided with an apparatus for recording memory access information for implementing a method for recording memory access information provided by the embodiments of the present disclosure. As shown in FIG. 10, the memory controller 2 may comprise: a command queue 21, an arbitrator 22, a write data cache module 23 and an apparatus 3 for recording memory access information. In an optional implementation, the memory controller 2 may perform data interaction with the memory 4 by executing an access request transmitted by the bus 1. When the bus 1 transmits the access request, it will transmit memory access write data corresponding to the access request to the write data cache module 23 for caching, and wait for an appropriate time to transmit again, to reduce latency caused by waiting for transmission.

The command queue 21 is used for storing access requests transmitted by an upstream device of the memory controller 2 and write commands generated by the apparatus 3 for recording memory access information described above.

The write data cache module 23 is used for caching memory access write data corresponding to the access request, and the to-be-recorded data generated by the apparatus 3 for recording memory access information described above. Caching the memory access write data corresponding to the access request, and the to-be-recorded data generated by the apparatus for recording memory access information into the write data cache module 23 may improve the speed and efficiency of data access. When data needs to be written, the data will first be written into the write data cache module 23. Then, at an appropriate time, the memory controller 2 will retrieve the data from the write data cache module 23 and write it into a memory.

The arbitrator 22 is used for selecting an access request or a write command from the command queue 21 as a target task; wherein if the obtained target task is a write command, the to-be-recorded data corresponding to the write command is written into a preset address range, so that the to-be-recorded data is recorded within the preset address range. In an optional implementation, the selecting an access request or a write command from the command queue as a target task specifically is: selecting an access request or a write command from to-be-executed access requests or write commands stored in the command queue as a target task, according to access priorities and/or address access efficiency of the to-be-executed access requests or write commands.

In a specific implementation, after receiving an access request transmitted from the upstream, the memory controller 2 will save access address information corresponding to the access request, together with information such as an access priority of the access request, to the command queue 21. At the same time, it will transmit an access request including access address information and access data source information to the apparatus 3 for recording memory access information to generate to-be-recorded data and a write command corresponding to the to-be-recorded data, thereby based on the write command corresponding to the to-be-recorded data, the to-be-recorded data may be written into a preset address range of a memory, so as to achieve recording of a memory data source.

Correspondingly, in memory data analysis, based on the memory data source provided by the above scheme as a data basis, data features of each device interacting with a memory may be reflected visually, thereby being more conducive to proposing feasible software and hardware optimization schemes based on corresponding data analysis.

The access address information refers to a memory address specified by an upstream device when transmitting an access request and needing to be accessed, so that a memory controller accesses data of a memory area requested for access based on the access address information; the access data source information at least comprises identification information of a device that issues the access request. In an optional implementation, the access data source information may further comprise a priority of the access request and a type of the access request, etc.

In an optional implementation, the identification information may comprise: a processor core identity number, or input/output device identity number; wherein when the processor core identity number exists, the identification information may further comprise a thread identity number inside the processor core.

In an optional implementation, after the recording of the to-be-recorded data is completed, a function of the apparatus 3 for recording memory access information may be closed via a control register. And by reading data within a specified address range in the memory 4, to-be-recorded data stored in the memory 4 and containing various data corresponding to the access request is obtained.

It may be seen that a memory controller provided with an apparatus for recording memory access information for implementing a method for recording memory access information, as provided by the embodiments of the present disclosure, writes to-be-recorded data into a preset address range of a memory by generating the to-be-recorded data and a write command corresponding to the to-be-recorded data, so as to achieve recording of sources of memory data.

Correspondingly, in memory data analysis, based on the memory data source provided by the above scheme as a data basis, data features of each device interacting with a memory may be reflected visually, thereby being more conducive to proposing feasible software and hardware optimization schemes based on corresponding data analysis.

Embodiments of the present disclosure further provide an electronic device, and the electronic device may comprise the memory controller described above.

Embodiments of the present disclosure further provide a storage medium, the storage medium stores one or more computer-executable instructions, and when the one or more computer-executable instructions are executed, the method for recording memory access information described above is implemented, or the method for analyzing memory data described above is implemented.

Embodiments of the present disclosure further provide a computer program product, the computer program product may comprise one or more computer-executable instructions, and when the one or more computer-executable instructions are executed, the method for recording memory access information described above is implemented, or the method for analyzing memory data described above is implemented.

The above text describes multiple embodiment schemes provided by the embodiments of the present disclosure, optional modes introduced by embodiment schemes may be combined and cross-referenced in the absence of conflict, thereby giving rise to multiple possible embodiment schemes, and all of these may be regarded as embodiment schemes revealed or disclosed by the embodiments of the present disclosure.

Although the embodiments of the present disclosure are described as above, the present disclosure is not limited thereto. Any person skilled in the art may make various changes and modifications without deviating from the spirit and scope of the present disclosure. Therefore, the protection scope of the present disclosure shall be subject to a scope defined by the claims.

## Claims

1. A method for recording memory access information, **characterized by** comprising:
obtaining an access request, the access request at least comprising access address information and access data source information, the access data source information at least comprising identification information of a device that issues the access request;
generating to-be-recorded data and a write command corresponding to the to-be-recorded data according to the access request, the to-be-recorded data comprising the access address information and the access data source information of the access request; and
writing the to-be-recorded data into a preset address range of a memory based on the write command corresponding to the to-be-recorded data; the preset address range being a preset region for storing the to-be-recorded data, and the preset address being set with access permissions.

2. The method for recording memory access information according to claim 1, **characterized in that** before the step of generating to-be-recorded data and a write command corresponding to the to-be-recorded data according to the access request, the method further comprises:
obtaining a to-be-recorded data trigger command, the to-be-recorded data trigger command being used to trigger execution of the step of generating to-be-recorded data and a write command corresponding to the to-be-recorded data according to the access request;
or,
obtaining a to-be-recorded data prohibition command, the to-be-recorded data prohibition command being used to prohibit execution of the step of generating to-be-recorded data and a write command corresponding to the to-be-recorded data according to the access request.

3. The method for recording memory access information according to claim 1 or 2, **characterized in that** writing the to-be-recorded data into a preset address range of a memory based on the write command corresponding to the to-be-recorded data comprises:
transmitting the write command to a command queue to wait for arbitration, and if the write command is selected, writing the to-be-recorded data into the preset address range, so that the to-be-recorded data is recorded within the preset address range.

4. The method for recording memory access information according to any one of claims 1 to 3, **characterized in that** generating to-be-recorded data and a write command corresponding to the to-be-recorded data according to the access request specifically comprises:
decoding the access address information of the access request;
generating the to-be-recorded data based on decoded access address information and the access data source information of the access request; and
generating a write command corresponding to the to-be-recorded data.

5. The method for recording memory access information according to any one of claims 1 to 4, **characterized in that** in the step of generating to-be-recorded data and a write command corresponding to the to-be-recorded data according to the access request, an access address of the write command is incremented by a preset value within the preset address range.

6. The method for recording memory access information according to claim 5, **characterized in that** the step of generating to-be-recorded data and a write command corresponding to the to-be-recorded data according to the access request, the method further comprises:
if the access address of the write command reaches an upper limit of the preset address range, stopping generating the write command.

7. The method for recording memory access information according to claim 6, **characterized in that** after the step of stopping generating the write command, the method further comprises:
stopping generating the to-be-recorded data.

8. The method for recording memory access information according to claim 5, **characterized in that** in the step of writing the to-be-recorded data into a preset address range of a memory based on the write command corresponding to the to-be-recorded data, a data volume of the to-be-recorded data is less than or equal to the preset value.

9. The method for recording memory access information according to claim 8, **characterized in that** when the data volume of the to-be-recorded data is less than the preset value, a zero-padding mode is adopted so that the data volume of the to-be-recorded data is equal to the preset value.

10. The method for recording memory access information according to any one of claims 1 to 9, **characterized in that** after the step of generating to-be-recorded data and a write command corresponding to the to-be-recorded data according to the access request, and before the step of writing the to-be-recorded data into a preset address range of a memory based on the write command corresponding to the to-be-recorded data, the method further comprises:
caching the to-be-recorded data into a write data cache.

11. The method for recording memory access information according to any one of claims 1 to 10, **characterized in that** the identification information at least comprises: a processor core identity number, or input/output device identity number; wherein when the processor core identity number exists, the identification information further comprises a thread identity number inside the processor core.

12. The method for recording memory access information according to any one of claims 1 to 11, **characterized in that** the access data source information further comprises a priority of the access request and a type of the access request.

13. A method for analyzing memory data, **characterized by** comprising:
performing data analysis on memory data based on to-be-recorded data, wherein the to-be-recorded data is written into a preset address range of a memory based on the method for recording memory access information according to any one of claims 1 to 12.

14. An apparatus for recording memory access information, **characterized by** comprising:
an obtaining module for obtaining an access request, the access request at least comprising access address information and access data source information, the access data source information at least comprising identification information of a device that issues the access request;
a generating module for generating to-be-recorded data and a write command corresponding to the to-be-recorded data according to the access request, the to-be-recorded data comprising the access address information and the access data source information of the access request; and
a writing module for writing the to-be-recorded data into a preset address range of a memory based on the write command corresponding to the to-be-recorded data; the preset address range being a preset region for storing the to-be-recorded data, and the preset address being set with access permissions.

15. A memory controller, **characterized by** comprising the apparatus for recording memory access information according to claim 14.

16. The memory controller according to claim 15, **characterized by** further comprising:
a command queue for storing access requests transmitted by an upstream device of the memory controller and write commands generated by the apparatus for recording memory access information according to claim 14;
a write data cache module for caching memory access write data corresponding to the access request, and the to-be-recorded data generated by the apparatus for recording memory access information according to claim 14;
an arbitrator for selecting an access request or a write command from the command queue as a target task; wherein if the obtained target task is a write command, the to-be-recorded data corresponding to the write command is written into a preset address range, so that the to-be-recorded data is recorded within the preset address range.

17. The memory controller according to claim 16, **characterized in that** selecting an access request or a write command from the command queue as a target task specifically is:
selecting an access request or a write command from to-be-executed access requests or write commands stored in the command queue as a target task, according to access priorities and/or address access efficiency of the to-be-executed access requests or write commands.

18. An electronic device, **characterized by** comprising the memory controller according to any one of claims 15 to 17.

19. A storage medium, **characterized in that** the storage medium stores one or more computer-executable instructions, and when the one or more computer-executable instructions are executed, the method for recording memory access information according to any one of claims 1 to 12 is implemented, or the method for analyzing memory data according to claim 13 is implemented.

20. A computer program product, **characterized by** comprising one or more computer-executable instructions, and when the one or more computer-executable instructions are executed, the method for recording memory access information according to any one of claims 1 to 12 is implemented, or the method for analyzing memory data according to claim 13 is implemented.
